Europäisches Patentamt

European Patent Office

Office européen des brevets

(11) Veröffentlichungsnummer: **0 198 234**
**B1**

(12) # EUROPÄISCHE PATENTSCHRIFT

(45) Veröffentlichungstag der Patentschrift:
10.01.90

(51) Int. Cl.⁴: **F 16 K 11/07**

(21) Anmeldenummer: 86103474.2

(22) Anmeldetag: **14.03.86**

(54) **Fluidisches Mehrwege-Schieberventil.**

(30) Priorität: **15.04.85 DE 3513457**

(43) Veröffentlichungstag der Anmeldung:
**22.10.86 Patentblatt 86/43**

(45) Bekanntmachung des Hinweises auf die Patenterteilung:
**10.01.90 Patentblatt 90/2**

(84) Benannte Vertragsstaaten:
**CH DE FR GB LI SE**

(56) Entgegenhaltungen:
**WO-A-83/03455**
**DE-A- 3 035 511**
**DE-B- 1 212 377**
**DE-U- 7 035 256**
**DE-U- 8 107 889**
**FR-A- 1 197 895**
**GB-A- 1 589 042**
**US-A- 4 375 226**

(73) Patentinhaber: **KNORR-BREMSE AG, Moosacher Strasse 80 Postfach 401060, D-8000 München 40 (DE)**

(72) Erfinder: **Funk, Jürgen, Engadiner Strasse 6, D-8000 München 71 (DE)**
Erfinder: **Pick, Peter, Spitzwegstrasse 22, D-8000 München 70 (DE)**

ACTORUM AG

# Beschreibung

Die Erfindung betrifft ein fluidisches Mehrwege-Schieberventil nach dem Oberbegriff des Patentanspruches 1.

Insbesondere handelt es sich hierbei um ein pneumatisches Mehrwege-Schieberventil zur Steuerung von pneumatischen Stellgliedern, z.B. pneumatischen Zylindern. Die Erfindung ist jedoch nicht auf die Verwendung bei pneumatischen Druckmitteln beschränkt. Das erfindungsgemäße Ventil ist prinzipiell auch für hydraulische Druckmittel geeignet, obwohl es für pneumatische Druckmittel, insbesondere zur Steuerung pneumatischer Zylinder besonders vorteilhaft ist.

Zu den Mehrwege-Ventilen gehören insbesondere 5/2-Wege-Ventile, die wahlweise auch als 5/3Wege-Ventile geschaltet werden können.

Ein Mehrwege-Schieberventil im wesentlichen der vorstehend genannten Art ist aus der WO-A-83/03 455 bekannt. Bei diesem Mehrwege-Schieberventil weisen die Nuten und die an diese anschließenden, jedoch zylindrisch ausgebildeten Ventilgehäuseausnehmungen in Richtung der Ventilachse zumindest annähernd gleiche Breiten auf und ihre radialen Mittelebenen liegen jeweils in einer Ebene. An der Außenseite des Ventilgehäuses befinden sich zu den Ventilgehäuseausnehmungen koaxiale Anschlußbohrungen erweiterten Durchmessers, in welche die Ventilgehäuseausnehmungen einmünden. Die Anschlußbohrungen sind zum Anschluß von Druckmittelleitungen mit einem Innengewinde versehen. Dieses bekannte Mehrwege-Schieberventil ist daher nicht zum Anbau an eine Einheits-Ventilträgerplatte der im Oberbegriff des Patentanspruches 1 erläuterten Art geeignet.

Es sind des weiteren Mehrwege-Schieberventile bekannt, die an eine sogenannte Einheits-Ventilträgerplatte gemäß den Merkmalen des Oberbegriffes im Patentanspruch 1 anschließbar sind. Hierbei handelt es sich insbesondere um eine sogenannte «Europa-Platte», die international genormt ist und daher auch als sogenannte ISO-Platte bezeichnet wird. Die Einheits-Ventilträgerplatte hat eine längliche Gestalt und besitzt in der Anschlußebene eine Reihe von quer verlaufenden, länglichen Anschlußöffnungen, von denen jede einer bestimmten Anschlußöffnung in der Anschlußebene des Ventilgehäuses des Mehrwege-Schieberventils zugeordnet ist.

Die Anschlußöffnungen der Einheits-Ventilträgerplatte liegen relativ eng nebeneinander. Würde daher ein Mehrwege-Schieberventil der aus der erwähnten WO-A-83/03 455 bekannten Art unter Entfall der Anschlußbohrungen an die Einheits-Ventilträgerplatte anflanschbar gestaltet, was evtl. naheliegen mag, so müßten die Breiten der Nuten und der Ventilgehäuseausnehmungen so klein gewählt werden, daß sich nur unzureichende Strömungsquerschnitte ergeben.

Die Anschlußöffnungen in der Anschlußebene der Ventilträgerplatte liegen dicht nebeneinander unveränderbar fest. Da bei den bekannten, an die Einheits-Ventilträgerplatte anbaubaren Mehrwege-Schieberventilen diese Anschlußöffnungen an die zu schaltenden Druckräume zwischen den Ventilschieberdichtungen anzuschließen sind, diese Druckräume aber bezogen auf eine radiale Mittelebene durch das Mehrwege-Schieberventil, gegenüber den Anschlußöffnungen in der Ventilträgerplatte in beiden axialen Richtungen zunehmend axial versetzt sind und zwar insbesondere dann, wenn große Strömungsquerschnitte mit weitgehend hohen Strömungsdurchsätzen erforderlich sind, und außerdem die einzelnen Druckräume beim Schalten des Ventils im wesentlichen überschneidungsfrei geschaltet werden sollen, weisen diese bekannten Ventile Ventilgehäuse mit einer durchgehenden, zentralen Gehäuseausnehmung auf, in die eine außen dichtende Hülse mit radialen Schlitzen und einer Anzahl von radial außenliegenden Dichtungsringen einsetzbar ist, wobei die Hülse außerdem radial innendichtende Dichtungsringe trägt, die dichtend an dem Ventilschieber anliegen, der seinerseits Nuten aufweist und der innerhalb der Hülse axial verschieblich angeordnet ist.

Derartige, bekannte Ventile bauen axial relativ lang. Der Aufbau der Hülse ist besonders kompliziert und besteht aus einer Vielzahl von zusammengesteckten Kunststoffteilen. Herstellung und Montage des bekannten Ventils sind somit besonders aufwendig. Bedingt durch den Ventilschieber mit den radial innendichtenden Dichtungen in der Hülse sind die freien Strömungsquerschnitte relativ klein, so daß die Forderung nach großen Strömungsdurchsätzen nicht oder nur unbefriedigend gelöst wird. Bei den bekannten Ventilen ist, wie gesagt, lediglich ein innendichtender Schieber mit radialen Nuten verwendbar, wodurch eine Federrückstellung des Schiebers in eine bevorzugte Ausgangslage nicht ohne weiteres möglich ist. Bei den bekannten, als 5/2-Wege-Ventil ausgebildeten Mehrwege-Ventilen ist außerdem eine 5/3-Wege-Ventilfunktion in ein- und demselben Gehäuse nicht möglich.

Aufgabe der Erfindung ist es daher, ein Mehrwege-Ventil der eingangs genannten Art anzugeben, das die Nachteile der bekannten, an eine Einheits-Ventilträgerplatte anbaubaren Mehrwege-Schieberventile vermeidet und dabei eine Hülse erübrigt, in der ein innendichtender Ventilschieber verschieblich ist. Das Mehrwege-Schieberventil soll in der Herstellung und in der Montage besonders einfach sein, axial weitgehend kurz bauen, aus besonders wenigen Teilen zusammengesetzt sein, in ein- und demselben Ventilgehäuse eine 5/2-Wege-Ventilfunktion und außerdem eine 5/3-Wege-Ventilfunktion zulassen, überschneidungsfreies Schalten sicherstellen und große Strömungsquerschnitte aufweisen. Dabei soll der Ventilschieberdurchmesser besonders groß ausgebildet werden können. Schließlich soll das erfindungsgemäße Ventil eine Federrückstellung aufweisen und sich mit wenigstens einem Steuerkolben mit gegenüber der stirnseitigen Schieberdruckfläche vergrößerter Druckfläche schalten lassen.

Diese Aufgabe wird nach der Erfindung durch eine Ausbildung des Mehrwege-Schieberventils gemäß den kennzeichnenden Merkmalen des Patentanspruches 1 gelöst.

In den Unteransprüchen sind nach der weiteren Erfindung vorteilhafte, weitere Ausbildungsmöglichkeiten eines derartigen Mehrwege-Schieberventils aufgezeigt.

Die Erfindung wird anhand eines Ausführungsbeispieles beschrieben, das in einer schematischen Zeichnung im Längsschnitt dargestellt ist.

Das Mehrwege-Schieberventil, das insbesondere zur Steuerung pneumatischer Stellglieder, beispielsweise von pneumatischen Zylindern dient, besitzt ein Ventilgehäuse 1, das in wenigstens einer flachen Anschlußebene 9 mehrere, quer zur Längserstreckung des Ventilgehäuses 1 verlaufende, spaltförmige Ventilgehäuse-Anschlußöffnungen 10 aufweist, die unter Zwischenlage einer Dichtplatten-Anschlußöffnungen 9″ aufweisenden Ventilträgerplatten-Dichtungsplatte 9′ an eine ebene Anschlußfläche einer nicht dargestellten, an sich bekannten Einheits-Ventilträgerplatte anschließbar ist, die auch unter dem Namen «Europa-Platte» oder «ISO-Platte» bekannt ist. Die Einheits-Ventilträgerplatte weist die erforderlichen Ventil-Entlüftungswege auf, die in Verbindung mit der Atmosphäre stehen. Weiterhin ist die Einheits-Ventilträgerplatte an die erforderlichen fluidischen Versorgungs-, Steuer- und Verbraucherleitungen angeschlossen, die mit Anschlußkanälen in der Trägerplatte verbunden sind. Dabei schließen die Entlüftungswege und die Anschlußkanäle der Trägerplatte jeweils an einzelne, quer zur Trägerplattenlängserstreckung verlaufende, spaltartige Trägerplatten-Anschlußöffnungen in der Trägerplattenanschlußfläche an. Jeder Trägerplatten-Anschlußöffnung ist eine Ventilgehäuse-Anschlußöffnung 10 in der Anschlußebene 9 des Ventilgehäuses 1 zugeordnet.

Das Ventilgehäuse 1 ist zur Aufnahme des Ventilschiebers 3 von einer durchgehenden, axialen und zylindrischen Gehäuseausnehmung 2 durchsetzt, in der der Ventilschieber 3 axial verschieblich geführt ist. Der Ventilschieber 3 weist einen relativ großen Schieberquerschnitt auf und trägt mehrere radiale Dichtungen 4, die dichtend an der zylindrischen Innenfläche 5 der Gehäuseausnehmung 2 anliegen. Die Gehäuseausnehmung 2 besitzt von den Dichtungen 4 überfahrbare, schmale, radiale Nuten 6. Das Ventilgehäuse 1 besitzt außerdem senkrecht zur Ventilachse 7 verlaufende, längliche, schachtartige Ventilgehäuseausnehmungen 8, die in der Anschlußebene 9 des Ventilgehäuses 1 die Ventilgehäuse-Anschlußöffnungen 10 bilden. Die Ventilgehäuseausnehmungen 8 erstrecken sich radial in das Ventilgehäuse 1 hinein und zwar bis in die Tiefe der radialen Nuten 6, die jeweils über die Länge einer Ventilgehäuseausnehmung 8 an diese schlitzartig anschließen. Dabei sind die sich in Richtung der Ventilachse 7 erstreckenden Breiten der Ventilgehäuseausnehmungen 8 wesentlich größer als die ebenfalls in Richtung der Ventilachse 7 sich erstreckenden Breiten der schlitzartigen Nutenanschlüsse 11.

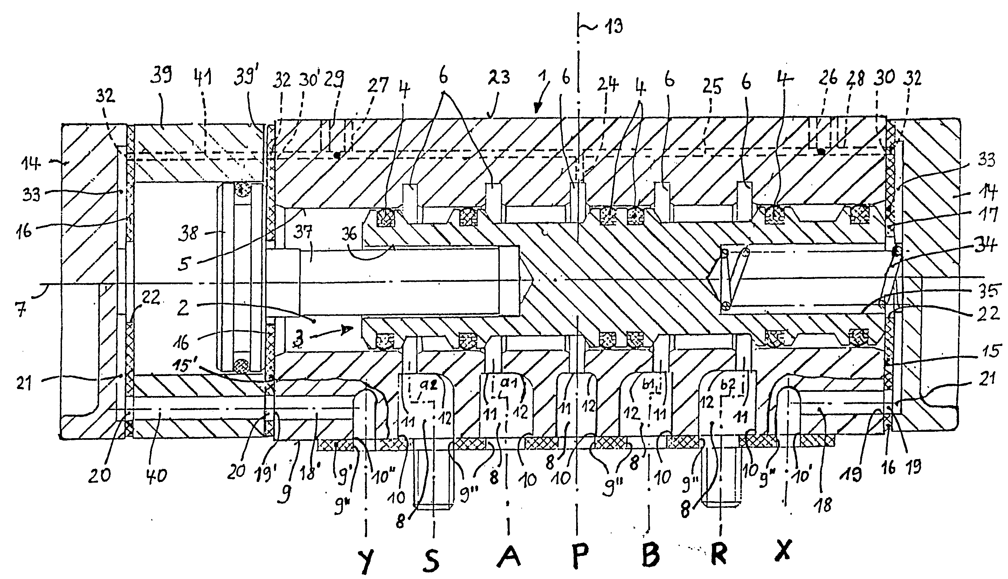

Die Nutenanschlüsse 11 der Nuten 6 in den Böden 12 der schachtförmigen Ventilgehäuseausnehmungen 8 liegen, von einer radialen Ventilgehäuse-Mittelebene 13 aus jeweils in beiden axialen Richtungen gesehen, gegenüber den mittleren, in Längsrichtung der zugehörigen Trägerplatten-Ausnehmungen sich erstreckenden Ebenen axial zunehmend versetzt, wie die strichpunktierten Linien $a_1$, $a_2$ und $b_1$, $b_2$ in der Zeichnung veranschaulichen.

Das Ventilgehäuse 1 ist an seinen beiden Stirnseiten jeweils von einem Ventildeckel 14 dicht abgeschlossen. Dabei befindet sich zwischen jedem Deckel 14 und der Stirnseite des Ventilgehäuses 1 jeweils eine Dichtungsringscheibe 16, die die Innenfläche 5 der axialen, zylindrischen Gehäuseausnehmungen 2 mit einer inneren Dichtungsringzone 17 radial einwärts überragt. Diese Dichtungsringzone 17 bildet eine Schieberendlagendämpfung für den Ventilschieber 3.

Das Ventilgehäuse 1 besitzt an seinen beiden Enden je eine an die Ventilträgerplatte anschließbare Steuerkanalbohrung 18 bzw. 18′, die an die Ventilgehäuse-Anschlußöffnungen 10′ bzw. 10″ der Anschlußebene 9 anschließen und jeweils in einer Stirnseite des Ventilgehäuses 1 mit Steuerkanal-Anschlußöffnungen 19 bzw. 19′ enden. Die Dichtungsringscheiben 16 besitzen Durchbrechungen 20, die an die Steuerkanal-Anschlußöffnungen 19 und 19′ in den Stirnseiten des Ventilgehäuses 1 anschließen. Die Ventildeckel 14 besitzen jeweils eine radiale Nut 21, die an die Durchbrechungen 20 der am Ventildeckel 14 anliegenden Dichtungsringscheibe 16 anschließt und die nach radial innen die innere Begrenzungskante 22 der Dichtungsringscheibe 16 überragt und so einen Anschluß an die Gehäuseausnehmung 2 zur einen Seite des Ventilschiebers 3 bildet. Damit sind die Steuerkanalbohrungen 18 und 18′ über die Ventildeckel 14 an die Gehäuseausnehmungen 2 beidseitig des Ventilschiebers 3 druckmitteldicht angeschlossen.

Das Ventilgehäuse 1 kann wahlweise eine zur Anschlußebene 9 an die Einheits-Ventilträgerplatte parallele, weitere Anschlußebene 23 für nicht dargestellte Magnetventile aufweisen, die unter Zwischenlage einer nicht dargestellten Magnetventildichtungsplatte an die weitere Anschlußebene 23 anflanschbar sind, wobei die über die Ventilträgerplatte an die Druckmittelversorgung angeschlossene, mittlere Gehäusenut 6 an eine radiale Gehäusebohrung 24 anschließt, die in der Zeichnung gestrichelt dargestellt ist. Die Gehäusebohrung 24 ist mit einer axialen Gehäusebohrung 25 verbunden, die ihrerseits mit in die weitere Anschlußebene 23 austretenden Anschlußbohrungen 26 und 27 verbunden ist, welche über Durchbrechungen in der Magnetventil-Dichtungsplatte an die nicht dargestellten, angeflanschten Magnetventile anschließen.

Im Bereich der weiteren Anschlußebene 23 sind außerdem gestrichelt dargestellte Steuerkanalbohrungen 28 und 29 vorhanden, die einerseits zum Anschluß an die Magnetventile in der Anschlußebene 23 austreten und andererseits an Steuerkanalanschlußöffnungen 30 und 30′ in den Stirnseiten des Ventilgehäuses 1 anschließen. Die Dichtungsringscheiben 16 besitzen dann Durchbrechungen 32, die an die Steuerkanal-Anschlußöffnungen 30 und 30′ anschließen, um weitere Nuten 33 in den Ventildeckeln 14 an die Steuerkanalbohrungen 28 und 29 anzuschließen, wobei die Nuten 33 sich entsprechend den Nuten 21 bis über die Innenkanten 22 der Dichtungsringscheiben 16 radial einwärts erstrecken, um dadurch die Steuerkanalbohrungen 28 und 29 an die Gehäuseausnehmungen 2 beidseitig des Ventilschiebers 3 anzuschließen. Die beiden seitens der Anschlußebene 9 befindlichen Steuerkanalbohrungen 18 und 18' lassen sich gegenüber den beiden seitens der Anschlußebene 23 befindlichen Steuerkanalbohrungen 28 und 29 derart axial versetzt anordnen, daß durch Drehen der Ventilgehäusedeckel 14 zusammen mit den Dichtungsringscheiben 16 um 180° nur jeweils die einen oder die anderen Steuerkanalbohrungen 18 und 18' oder 28 und 29 über die zugehörigen Nuten 21 oder 33 der Ventildeckel 14 an die Gehäuseausnehmung 2 angeschlossen sind, während gleichzeitig die anderen oder die einen Steuerkanalbohrungen 28 und 29 oder 18 und 18' durch die Dichtungsringscheiben 16 abgesperrt sind.

Das erfindungsgemäße Schieberventil ist somit entweder über Magnetventile auf der oberen Anschlußebene 23 oder allein über die Einheits-Trägerplatte an der unteren Anschlußebene 9 steuerbar.

An dem rechten Ventildeckel 14 stützt sich eine Ventilfeder 34 ab, die in eine axiale Bohrung 35 des Ventilschiebers 3 eingreift und an diesem anliegt.

Der Ventilschieber 3 besitzt an seinem der Ventilfeder 37 abgewandten Ende eine weitere axiale Bohrung 36, in die eine Steuerstange 37 eines Steuerkolbens 38 eingreift, der mit einer gegenüber der Stirnfläche des Ventilschiebers 3 wesentlich größeren Druckbeaufschlagungsfläche in dem zylindrischen Innenraum eines Gehäusezwischenringes 39 axial verschieblich ist. Der Gehäusezwischenring 39 ist über eine Dichtungsringscheibe 16 an die gemäß der Zeichnung linke Stirnseite des Ventilgehäuses 1 druckmitteldicht angesetzt und ist über eine weitere Dichtungsringscheibe 16 durch den linken Ventildeckel 14 druckmitteldicht abgeschlossen.

Die linke Steuerkanalbohrung 18' des Ventilgehäuses 1 schließt über die Durchbrechung 20 in der Dichtungsringscheibe 16 an eine axiale Bohrung 40 im Gehäusezwischenring 39 an, die über die Durchbrechung 20 der ventildeckelseitigen Dichtungsringscheibe 16 und die Nut 21 des Ventildeckels 14 an den Innenraum des Gehäusezwischenringes 39 zum Beaufschlagen des Steuerkolbens 38 angeschlossen ist. Der Gehäusezwischenring 39 besitzt eine radiale Nut 39' zur Entlüftung des Raumes zwischen der ventilgehäuseseitigen Dichtungsringscheibe 16 und dem Steuerkolben 38.

Bei dem erfindungsgemäßen Schieberventil kann ein Ventilschieber verwendet werden, der über seine gesamte axiale Länge von einem einheitlichen Dichtungsmaterial ummantelt ist, das in mehreren aufeinanderfolgenden, radialen Ringbereichen des Ventilschiebers kolbenringartige Dichtungsringfunktionen aufweist, entsprechend den ringartigen Dichtungen 4 in der Zeichnung. Erfindungsgemäß liegt dabei das Dichtungsmaterial mit elastischer Vorspannung auf dem Ventilschieber fest auf, der als zylindrischer Stab ausgebildet ist. Das Dichtungsmaterial wird zur Montage auf den Stab aufgezogen, indem es elastisch aufgeweitet wird. Die Aufweitung kann zum Beispiel durch Druckluft geschehen. Am Außenumfang des schlauchartigen Dichtungsmaterials befinden sich an mehreren aufeinanderfolgenden Stellen umlaufende radiale Dichtungswülste, die kolbenringartige Dichtungsfunktionen entsprechend den ringartigen Dichtungen 4 aufweisen.

Der vorstehend beschriebene, kompakte Ventilschieber ist nicht nur bei den vorstehend beschriebenen Ventilgehäusen anwendbar, sondern läßt sich auch vorteilhaft in herkömmlichen Mehrwege-Schieberventilgehäusen anwenden.

Das in der Zeichnung dargestellte Ausführungsbeispiel ist ein 5/2-Wege-Ventil, in dem der Ventilschieber 3 sich entgegen der Kraft der Ventilfeder 34 in seiner rechten Endstellung befindet, in der er mit seiner rechten Stirnfläche an der Dichtungsringscheibe 16 anliegt. Hierzu ist der Steuerkolben 38 über die Steuerkanalbohrung 18' und die Nut 21 im linken Ventildeckel 14 mit einem Steuerdruck beaufschlagt.

Die mittlere Ventilgehäuse-Anschlußöffnung 10 mit der Bezeichnung P ist an die Druckluftversorgung angeschlossen. In der in der Zeichnung dargestellten Ventilstellung ist die Versorgung mit der benachbarten, linken Ventilgehäuse-Anschlußöffnung 10 mit der Bezeichnung A verbunden, die z.B. an den einen Zylinderanschluß eines nicht dargestellten, pneumatischen Zylinders angeschlossen ist, während der andere Zylinderanschluß über die der Versorgung benachbarte, rechte Ventilgehäuse-Anschlußöffnung 10 mit der Bezeichnung B an die weiter rechts liegende Ventilgehäuse-Anschlußöffnung 10 mit der Bezeichnung R zur Entlüftung angeschlossen ist. Um das Schieberventil aus der dargestellten Stellung in die entgegengesetzte, linke Endstellung umzuschalten, wird der ganz rechts außenliegende Steueranschluß mit der Bezeichnung X über die nicht dargestellte Ventilträgerplatte mit einem Steuerdrucksignal beaufschlagt, um den Ventilschieber 3 von seiner rechten Endstellung in seine linke Endstellung umzuschalten. Gleichzeitig wird der ganz links liegende Steueranschluß Y entlüftet, so daß der Ventilschieber 3 zusammen mit dem Steuerkolben 38 nach links bis in die linke Endstellung bewegt wird, in der nunmehr der gegenüber dem Versorgungsanschluß P rechts benachbarte Anschluß B von dem Versorgungsanschluß mit Druck beaufschlagt ist, während der links liegende Anschluß A über den weiter links liegenden Anschluß S entlüftet ist.

Es ist klar, daß auch das rechte Ende des Ventilschiebers anstelle der Ventilfeder 34 mit einem Steuerkolben entsprechend dem Steuerkolben 38 versehen sein kann. Hierbei ist dann auch am rechten Ende des Ventilgehäuses 1 ein Gehäusezwischenring entsprechend dem linken Gehäusezwischenring 39 anzubringen. Es ist klar, daß der Gehäusezwischenring auch einen größeren Durchmesser aufweisen kann als in der Zeichnung, damit der Steuerkolben einen noch größeren Durchmesser erhalten kann.

Sofern der Ventilschieber 3, wie dargestellt, einseitig mit einem Steuerkolben 38 verbunden ist und eine Steuerung des Schieberventils durch Magnetventile auf der Anschlußebene 23 erfolgt, gelangt die Steuerluft aus der Steuerkanalbohrung 29 über die Durchbrechung 32 der linken Dichtungsringscheibe 16 in einen den Gehäusezwischenring 39 axial durchsetzenden Steuerkanal 41, der durch die Durchbrechung 32 in der Dichtungsringscheibe 16 zwischen dem linken Ventildeckel 14 und dem Gehäusezwischenring 39 an die Deckelnut 33 anschließt.

Bezugszeichenliste

| | | |
|---|---|---|
| 1 | | Ventilgehäuse |
| 2 | | Gehäuseausnehmung |
| 3 | | Ventilschieber |
| 4 | | Dichtung |
| 5 | | Innenfläche |
| 6 | | Nuten |
| 7 | | Ventilachse |
| 8 | | Ventilgehäuseausnehmung |
| 9 | | Anschlußebene |
| 9' | | Dichtungsplatte |
| 9'' | | Anschlußöffnungen |
| 10 | | Ventilgehäuse-Anschlußöffnung |
| 11 | | Nutenanschluß |
| 12 | | Boden |
| 13 | | Ventilgehäuse-Mittelebene |
| 14 | | Ventildeckel |
| 15, | 15' | Gehäusestirnfläche |
| 16 | | Dichtungsringscheibe |
| 17 | | Dichtungsringzone |
| 18, | 18' | Steuerkanalbohrung |
| 19, | 19' | Steuerkanal-Anschlußöffnung |
| 20 | | Durchbrechung |
| 21 | | Nut |
| 22 | | Begrenzungskante (innen) |
| 23 | | Anschlußebene |
| 24 | | Gehäusebohrung (radial) |
| 25 | | Gehäusebohrung (axial) |
| 26 | | Anschlußbohrungen |
| 27 | | Anschlußbohrungen |
| 28 | | Steuerkanalbohrung |
| 29 | | Steuerkanalbohrung |
| 30, | 30' | Steuerkanal-Anschlußöffnung |
| 32 | | Durchbrechung |
| 33 | | Nut |
| 34 | | Ventilfeder |
| 35 | | Bohrung |
| 36 | | Bohrung |
| 37 | | Steuerstange |
| 38 | | Steuerkolben |
| 39 | | Gehäusezwischenring |
| 39' | | Nut |
| 40 | | Bohrung |
| 41 | | Steuerkanal |

**Patentansprüche**

1. Fluidisches Mehrwege-Schieberventil, insbesondere zur Steuerung von pneumatischen Stellgliedern, mit einem Ventilgehäuse (1), das in wenigstens einer flachen Anschlußebene (9) des Ventilgehäuses mehrere, quer zur Längserstreckung des Ventilgehäuses (1) verlaufende, spaltförmige, fluidische Ventilgehäuse-Anschlußöffnungen (10) aufweist, die unter Zwischenlage einer Anschlußöffnungen (9'') aufweisenden Dichtungsplatte (9') an eine ebene Anschlußfläche einer Einheits-Ventilträgerplatte anschließbar sind, die die erforderlichen Ventilentlüftungswege in Verbindung mit der Atmosphäre aufweist und an die die erforderlichen fluidischen Versorgungs-, Steuer- und Verbraucherleitungen angeschlossen sind, die mit Anschlußkanälen in der Trägerplatte verbunden sind, wobei die Entlüftungswege und die Anschlußkanäle der Trägerplatte jeweils an einzelne, quer zur Trägerplattenlängserstreckung verlaufende, spaltartige Trägerplatten-Anschlußöffnungen in der Trägerplatten-Anschlußfläche anschließen und wobei je eine Trägerplatten-Anschlußöffnung einer Ventilgehäuse-Anschlußöffnung (10) zugeordnet ist, und wobei weiterhin das Ventilgehäuse (1) von einer durchgehenden, axialen und zylindrischen Gehäuseausnehmung (2) durchsetzt ist, in der der Ventilschieber (3) verschieblich ist, der Träger mehrerer radialer Dichtungen (4) ist, die dichtend an der zylindrischen Innenfläche (5) der Gehäuseausnehmung (2) anliegen, wobei die Gehäuseausnehmung (2) von den Dichtungen (4) überfahrbare, schmale, radiale Nuten (6) aufweist, wobei senkrecht zur Ventilachse verlaufende, längliche, schachtartige Ventilgehäuseausnehmungen (8) vorhanden sind, die in der Anschlußebene (9) des Ventilgehäuses (1) die Ventilgehäuse-Anschlußöffnungen (10) bilden und sich bis in die Tiefe der radialen Nuten (6) erstrecken, die jeweils über die Länge einer Ventilgehäuse-Ausnehmung (8) an diese schlitzartig anschließen, dadurch gekennzeichnet, daß die Breiten der Ventilgehäuse-Ausnehmung (8) wesentlich größer sind als die Breiten der schlitzartigen Nutenanschlüsse (11), daß die mittleren Längsebenen durch die Nutenanschlüsse (11) der Nuten (6) gegenüber den mittleren Längsebenen durch die den Nutenanschlüssen (11) jeweils zugeordneten Trägerplatten-Anschlußöffnungen von einer radialen Ventilgehäuse-Mittelebene (13) aus in beiden axialen Richtungen zunehmend axial versetzt liegen, daß das Ventilgehäuse (1) im Bereich der Ventilträgerplatte wenigstens eine an eine Steuerdruckanschlußöffnung der Ventilträgerplatte angeschlossene Steuerkanalbohrung (18;18') aufweist, die stirnseitig in eine Steuerkanal-Anschlußöffnung (19;19') in einer Gehäusestirnfläche (15;15') austritt, daß sich an dem einen Gehäusedeckel (14) eine Ventilfeder (34) abstützt, die in eine axiale Bohrung (35) im Ventilschieber (3) eingreift, und daß der Ventilschieber (3) an seinem anderen Ende eine axiale Bohrung (36) aufweist, in die eine Steuerstange (37) eines Steuerkolbens (38) mit einer gegenüber der Stirnfläche des Ventilschiebers (3) wesentlich größeren Druckbeaufschlagungsfläche eingreift.

2. Mehrwege-Schieberventil nach Anspruch 1, dadurch gekennzeichnet, daß das Ventilgehäuse (1) stirnseitig von je einem Ventildeckel (14) dicht abgeschlossen ist, wobei zwischen dem Ventildeckel (14) und der Gehäusestirnfläche (15;15') eine Dichtungsringscheibe (16) vorhanden ist, die die zylindrische Innenfläche (5) der axialen Gehäuseausnehmung (2) mit einer inneren Dichtungsringzone (17) radial einwärts überragt und so eine Schieberendlagendämpfung bildet.

3. Mehrwege-Schieberventil nach Anspruch 2, dadurch gekennzeichnet, daß die Dichtungsringscheibe (16) für den druckmitteldichten Anschluß eines Gehäusedeckels (14) eine Durchbrechung (20) aufweist, die an die Steuerkanal-Anschlußöffnung (19;19') anschließt, und daß der zugehörige Gehäusedeckel (14) wenigstens eine radiale Nut (21) aufweist, die an die Durchbrechung (20) in der Dichtungsringscheibe (16) anschließt und die die innere Begrenzungskante (22) der Dichtungsringscheibe (16) zum Anschluß and die Gehäuseausnehmung (2) zur einen Seite des Ventilschiebers (3) radial einwärts überragt.

4. Mehrwege-Schieberventil nach Anspruch 1, dadurch gekennzeichnet, daß das Ventilgehäuse (1) eine zur Anschlußebene (9) an die Einheits-Ventilträgerplatte parallele, weitere Anschlußebene (23) für Magnetventile aufweist, die unter Zwischenlage einer Magnetventil-Dichtungsplatte an die weitere Anschlußebene (23) anflanschbar sind, wobei die über die Ventilträgerplatte an die Druckmittelversorgung angeschlossene, mittlere Nut (6) in der Gehäuseausnehmung (2) an eine radiale Gehäusebohrung (24) anschließt, die mit einer axialen Gehäusebohrung (25) verbunden ist, welche ihrerseits mit in die weitere Anschlußebene (23) austretenden Anschlußbohrungen (26, 27) verbunden ist, die über Durchbrechungen in der Magnetventil-Dichtungsplatte an die angeflanschten Magnetventile anschließen.

5. Mehrwege-Schieberventil nach den Ansprüchen 2 und 4, dadurch gekennzeichnet, daß das Ventilgehäuse (1) im Bereich der weiteren Anschlußebenen (23) für die Magnetventile wenigstens eine weitere Steuerkanalbohrung (28, 29) aufweist, die ein Magnetventil mit einer weiteren Steuerkanal-Anschlußöffnung (30; 30') in einer Gehäusestirnfläche (15; 15') des Ventilgehäuses (1) verbindet, daß die Dichtungsringscheibe (16) für den Gehäusedeckel (14) eine Durchbrechung (32) aufweist, die an die weitere Steuerkanal-Anschlußöffnung (30; 30') anschließt und daß der Gehäusedeckel (14) eine radiale Nut (33) aufweist, die an die Durchbrechungen (32) in der Dichtungsringscheibe (16) anschließt und die innere Begrenzungskante (22) der Dichtungsringscheibe (16) zum Anschluß an die Gehäuseausnehmung (2) zur einen Seite des Ventilschiebers (3) radial einwärts überragt.

6. Mehrwege-Schieberventil nach den Ansprüchen 3 und 4, dadurch gekennzeichnet, daß durch die Lage der Dichtungsringscheibe (16) und/oder des Gehäusedeckels (14) gegenüber einer Gehäusestirnfläche (15; 15') des Ventilgehäuses (1) jeweils nur eine der beiden in Verbindung mit der Ventilträgerplatte oder in Verbindung mit einem Magnetventil befindlichen, gehäusestirnseitigen Steuerkanal-Anschlußöffnungen (19; 19' oder 30; 30') über eine zugehörige Nut (21 oder 33) im Gehäusedeckel (14) an die Gehäuseausnehmung (2) zur einen Seite des Ventilschiebers (3) zur wahlweisen Druckbeaufschlagung des Ventilschiebers (3) mit einem Steuerdruck aus einer an die Ventilträgerplatte angeschlossenen Steuerdruckleitung oder mit dem an ein Magnetventil angeschlossenen Druckmitteldruck angeschlossen ist.

7. Mehrwege-Schieberventil nach Anspruch 1, dadurch gekennzeichnet, daß steuerkolbenseitig an die zugehörige Stirnfläche des Gehäuses (1) unter Zwischenlage einer Dichtungsringscheibe (16) ein Gehäusezwischenring (39) mit einem gegenüber dem Durchmesser der axialen, zylindrischen Gehäuseausnehmung (2) für den Ventilschieber (3) vergrößerten Innendurchmesser druckmitteldicht ansetzbar ist, wobei der Steuerkolben (38) in dem Gehäusezwischenring (39) verschieblich ist, und daß an den Gehäusezwischenring (39) unter Zwischenlage einer weiteren Dichtungsringscheibe (16) ein Gehäusedeckel (14) druckmitteldicht anschließbar ist, wobei der Gehäusezwischenring (39) wenigstens eine axiale Bohrung (40) aufweist, die über die Durchbrechung (20) in der Dichtungsringscheibe (16) an die Steuerkanalbohrung (18; 18') im Ventilgehäuse (1) anschließt.

8. Mehrwege-Schieberventil nach Anspruch 7, dadurch gekennzeichnet, daß die Ventilgehäusedeckel (14) und die zugehörigen Dichtungsringscheiben (16) mit oder ohne Zwischenlage eines Gehäusezwischenringes (39) gleichartig ausgebildet sind und die Dichtungsringscheiben (16) zwischen Gehäusedeckel (14) und Ventilgehäuse (1), zwischen Gehäusezwischenring (39) und Ventilgehäuse (1) und zwischen Gehäusedeckel (14) und Gehäusezwischenring (39) gleichartig ausgebildet sind.

9. Mehrwege-Schieberventil nach Anspruch 1, wobei der Ventilschieber über seine gesamte, axiale Länge von einem einheitlichen Dichtungsmaterial ummantelt ist, das in mehreren aufeinanderfolgenden, radialen Ringbereichen des Ventilschiebers kolbenringartige Dichtungsringfunktionen aufweist, dadurch gekennzeichnet, daß das Dichtungsmaterial mit elastischer Vorspannung auf dem Ventilschieber fest aufliegt, der als zylindrischer Stab ausgebildet ist, und daß das zur Montage auf den Stab aufziehbare, hierfür elastisch aufweitbare Dichtungsmaterial an seinem Außenumfang an mehreren aufeinanderfolgenden Stellen umlaufenden radiale Dichtungswülste mit den kolbenringartigen Dichtungsfunktionen aufweist.

## Claims

1. Fluidic multiway slide valve, in particular for the control of pneumatic positioning elements with a valve housing (1) which has in at least one flat connection plane (9) of the valve housing several slit-like fluidic valve housing connection apertures running transversely to the longitudinal extent of the valve housing (1), which, by the interposition of a sealing plate (9') with a connection aperture (9''), can be connected to a flat connection surface of a standard valve carrier plate which has the required ventilation passages in contact with the atmosphere and onto which are attached the required fluidic supply, control and service lines, which are connected to connecting channels in the carrier plate, the ventilation passages and the connecting channels of the carrier plate connecting to individual, slit-like carrier plate connecting apertures, running transversely to the longitudinal extent of the carrier plate, in the carrier plate connection surface and each carrier plate connection aperture being assigned to a valve housing connection aperture (10), the valve housing (1) moreover being penetrated by a continuous, axial and cylindrical housing recess (2) in which the valve slide (3) is displaceable, which carries several radial seals (4) fitting tightly against the cylindrical inner surface (5) of the housing recess (2), the housing recess (2) having narrow radial grooves (6) over the seals (4) can travel, oblong shaft-like valve housing recesses (8) extending perpendicular to the valve axis being present, which form the valve housing connection apertures (10) in the connection plane (9) of the valve housing (1) and which reach to the depth of the radial grooves (6) which each connect to a valve housing recess (8) along its length in the manner of a slit, characterised in that the widths of the valve housing recess (8) are significantly larger than the widths of the slit-like groove connections (11), in that the central longitudinal planes through the groove connections (11) of the grooves (6) lie increasingly axially offset in both axial directions, starting from a radial central plane (13) of the valve housing, with respect to the central longitudinal planes through the carrier plate connection apertures corresponding to the groove connections (11), in that the valve housing (1), in the region of the valve carrier plate, has at least one control channel bore (18; 18') connected to a control pressure connection aperture of the valve carrier plate, which bore emerges at the end side into a control channel connection aperture (19; 19') in an end surface of the housing (15' 15'), in that a valve spring (34) is supported on the one housing cover (14) and engages into an axial bore (35) in the valve slide (3) and in that the valve slide (3) has an axial bore (36) on its other end, into which engages a control rod (37) of a control piston (38) with a pressure-acting surface which is significantly larger with respect to the end surface of the valve slide (3).

2. Multiway slide valve according to claim 1, characterised in that the valve housing (1) is sealed off tightly on each end by a valve cover (14), a sealing ring washer (16) being present between the valve cover (14) and the end surface of the housing (15; 15'), overhanging radially inwards the cylindrical inner surface (5) of the axial housing recess (2) with an inner sealing ring zone (17) thus forming a slide limit damping means.

3. Multiway slide valve according to claim 2, characterised in that the sealing ring washer (16) has a perforation (20) for connecting a housing cover (14) in a manner impervious to the pressure medium, which perforation connects to the control channel connection aperture (19; 19') and in that the associated housing cover (14) has a least one radial groove (21) which connects to the perforation (20) in the sealing ring washer (16) and which projects radially inwards of the inner boundary edge (22) of the sealing ring washer (16) for connection to the housing recess (2) on one side of the valve slide (3).

4. Multiway slide valve according to claim 1, characterised in that the valve housing (1) has a further connecting plane (23) for solenoid valves which is parallel to the connecting plane (9) to the standard valve carrier plate, which solenoid valves can be flanged on to the further connecting plane (23) by the interposition of a solenoid valve sealing plate, the central groove (6) in the housing recess (2), connected to the pressure means supply via the valve carrier plate, communicating with a radial housing bore (24) connected to an axial housing bore (25) which is itself connected to connecting bores (26, 27) emerging into the further connection plane (23), which connect to the flanged-on solenoid valves via perforations in the solenoid valve sealing plate.

5. Multiway slide valve according to claims 2 and 4, characterised in that the valve housing (1) has, in the region of the further connecting plane (23) for the solenoid valves, at least one further control channel bore (28, 29), which connects a solenoid valve with a further control channel connection aperture (30; 30') in an end surface (15; 15') of the valve housing (1), in that the sealing ring washer (16) for the housing cover (14) has a perforation (32) which connects to the further control channel connection aperture (30; 30') and in that the housing cover (14) has a radial groove (33) which connects to the perforations (32) in the sealing ring washer (16) and projects radially inwards of the inner boundary edge (22) of the sealing ring washer (16) on one side of the valve slide (3) for connection to the housing recess (2).

6. Multiway slide valve according to claims 3 and 4, characterised in that through the position of the sealing ring washer (16) and/or of the housing cover (14) relative to one end surface (15; 15') of the valve housing (1) in each case only one of the two control channel connection apertures (19; 19'), on the end surface of the housing and connected to the valve carrier plate or to a solenoid valve, is connected via an associated groove (21 or 33) in the housing cover (14) to the housing recess (2) to one side of the valve slide (3) for application of pressure to the valve slide (3) optionally with a control pressure from a control pressure supply lead connected to the valve carrier plate or with a pressure medium pressure connected to a solenoid valve.

7. Multiway slide valve according to claim 1, characterised in that a housing spacer ring (39), with an internal diameter larger than the diameter of the axial cylindrical housing recess (2) for the valve slide (3), can be attached, in a manner impervious to the pressure means and on the control piston side, to the associated end surface of the housing (1) with the interposition of a sealing ring washer (16), the control piston (38) being displaceable in the housing spacer ring (39), and in that one housing cover (14) can be connected, in a manner impervious to the pressure means, to the housing spacer ring (39) with the interposition of a further sealing ring washer (16), the housing spacer (39) having at least one axial bore (40), which connects to the control channel bore (18; 18') in the valve housing (1) via the perforation (20) in the sealing ring washer (16).

8. Multiway slide valve according to claim 7, characterised in that the valve housing covers (14) and the corresponding sealing ring washers (16) are constructed in the same way with or without the interposition of a housing spacer ring (39) and the sealing ring washers (16) are constructed in the same way between housing cover (14) and valve housing (1), between housing spacer ring (39) and valve housing (1) and between housing cover (14) and housing spacer ring (39).

9. Multiway slide valve according to claim 1, in which the valve slide is encased over its entire axial length by a homogeneous sealing material which has sealing ring functions in the manner of a piston ring

7

in several successive radial ring regions of the valve slide, characterised in that the sealing material rests securely with elastic bias on the valve slide, which is constructed as a cylindrical bar, and in that the sealing material, which, for the purpose of fitting, can be elastically enlarged and pulled onto the bar, has, at several successive points on its outer periphery, circular radial sealing protuberances with the piston-ring-type sealing functions.

**Revendications**

1. Soupape fluidique à coulisse du type à voies multiples, en particulier pour commander des organes de réglage pneumatiques, comportant un carter de soupape (1) pourvu, dans au moins un plan de raccordement plat (9) de carter de soupape, plusieurs ouvertures de raccordement fluidiques (10) du carter de soupape, qui s'étendent, en forme de fentes, transversalement à l'extension longitudinale du carter de soupape (1), et qui est susceptible, avec interposition d'une plaque d'étanchéité (9') pourvue d'une ouverture de raccordement (9''), d'être raccordée à une surface de raccordement plane d'une plaque standard de support de soupape qui comporte les voies de désaération nécessaires de la soupape en liaison avec l'atmosphère et à laquelle sont reliées les conduites fluidiques d'alimentation, de commande et de consommation nécessaires et reliées à des canaux de raccordement ménagés dans la plaque de support, du genre dans laquelle les voies de désaération et les canaux de raccordement de la plaque de support sont respectivement raccordés à des ouvertures de raccordement de la plaque de support, ménagées dans la surface de raccordement de la plaque de support, dans laquelle chaque ouverture de raccordement de la plaque de support est associée à une ouverture de raccordement (10) du carter de soupape, dans laquelle, en outre, le carter de soupape (1) est traversé par un perçage de carter (2) continu, axial et cylindrique, dans lequel est déplaçable la coulisse ou le tiroir de soupape (3), le support étant muni de plusieurs joints d'étanchéité radiaux (4) qui portent avec étanchéité contre la surface cylindrique intérieure (5) du perçage de carter (2), dans laquelle le perçage de carter (2) comporte des gorges radiales et étroites (6) sur lesquelles peuvent passer les joints d'étanchéité (4), dans laquelle sont prévues des ouvertures (8) du carter de soupape qui s'étendent perpendiculairement à l'axe de la soupape, qui sont allongées et en forme de puits, qui constituent, dans le plan de raccordement (9) du carter de soupape (1), les ouvertures de raccordement (10) du carter de soupape et qui s'étendent profondément dans des gorges radiales (6) et qui se raccordent respectivement à ces dernières, en forme de fentes, sur la longueur d'une ouverture (8) du carter de soupape, caractérisée par le fait que les largeurs des ouvertures (8) du carter de soupape sont notablement plus grandes que les largeurs des raccords, en forme de fentes (11), des gorges, que les plans médians longitudinaux passant par les raccords (11) des gorges (6) sont, par rapport au plan médian longitudinal passant par les ouvertures de raccordement de la plaque de support et respectivement associées aux raccords des gorges (11), décalés axialement et de façon croissante dans les deux directions axiales, à partir d'un plan radial médian (13) du carter de soupape, que le carter de soupape (1) comporte, dans la zone de la plaque de support de soupape, au moins un perçage de canal de commande (18; 18') qui est relié à une ouverture de raccordement de pression de commande de la plaque de support de soupape, et qui débouche du côté frontal dans une ouverture de raccordement (19; 19') du canal de commande ménagée dans une surface frontale du carter (15; 15'), que contre un couvercle de carter (14) prend appui un ressort de soupape (34) qui pénètre dans un perçage axial (35) ménagé dans la coulisse (ou tiroir distributeur) de soupape (3) et que ladite coulisse (3) présente à son autre extrémité un perçage axial (36) dans lequel pénètre une tige de commande (37) d'un piston de commande (38) ayant, par rapport à la surface frontale de la coulisse de soupape (3) une surface de charge en pression bien plus importante.

2. Soupape à coulisse du type à voies multiples selon la revendication 1, caractérisée par le fait que le carter de soupape (1) est fermé, de façon étanche, sur ses côtés frontaux, par respectivement un couvercle de soupape (14), un disque annulaire d'étanchéité (16) étant prévu entre le couvercle de soupape (14) et la surface frontale du carter (15; 15'), lequel disque annulaire d'étanchéité déborde radialement vers l'intérieur, par une zone annulaire intérieure d'étanchéité (16), la surface cylindrique intérieure (15) du perçage axial (2) du carter, formant ainsi un amortissement aux positions d'extrémité de la coulisse.

3. Soupape à coulisse du type à voies multiples selon la revendication 2, caractérisée par le fait que le disque annulaire d'étanchéité (16) comporte, pour le raccordement, étanche au milieu sous pression, d'un couvercle de carter (14), une ouverture (20) qui se raccorde à l'ouverture de raccordement (19; 19') du canal de commande, et que le couvercle de boîtier associé (14) est pourvu d'au moins une gorge radiale (21) qui se raccorde à l'ouverture (20) ménagée dans le disque annulaire d'étanchéité (16), et qui déborde radialement vers l'intérieur, le bord de limitation intérieure (22) du disque annulaire d'étanchéité (16) sur un côté de la coulisse de soupape (3), en vue du raccordement à l'ouver-ture de carter (2).

4. Soupape à coulisse du type à voies multiples selon la revendication 1, caractérisée par le fait que le carter de soupape (1) comporte, parallèlement au plan de raccordement (9) de la plaque de support unitaire de la soupape, un second plan de raccordement (23) pour des électrovannes qui sont, avec interposition d'une plaque d'étanchéité des électrovannes, susceptibles d'être bridées sur ledit second plan de raccordement (23), la réalisation étant telle que la gorge médiane (6) qui est ménagée dans le perçage de carter (2) et qui est reliée à l'alimentation en milieu sous pression, débouche dans un perçage radial (24) du carter, ledit perçage (24) étant relié à un perçage axial (25) du carter qui, à son tour, est relié au perçage de raccordement (26, 27) qui débouche au niveau dudit second plan de raccordement (23) et qui débouche, par l'intermédiaire d'ouvertures ménagées dans la plaque d'étanchéité pour les électrovannes, dans les électrovannes bridées.

5. Soupape à coulisse du type à voies multiples selon les revendications 2 et 4, caractérisée par le fait que le carter de soupape (1) comporte, dans la partie intéressant ledit second plan de raccordement (23) pour les électrovannes, au moins un perçage de canal de commande supplémentaire (28, 29), qui relie une électrovanne avec une ouverture de raccordement supplémentaire du canal de commande (30; 30') ménagée dans une surface frontale du carter (15; 15') du carter de soupape (1), que le disque annulaire d'étanchéité (16) pour le couvercle de carter (14) comporte une ouverture (32) qui fait suite à l'ouverture de raccordement supplémentaire du canal de commande (30; 30') et que le couvercle de carter (14) comporte une gorge radiale (33) qui est reliée aux ouvertures (32) ménagées dans le disque annulaire d'étanchéité (16), et qui déborde, radialement vers l'intérieur et sur un côté de la coulisse de soupape (3), le bord de limitation intérieure (22) du disque annulaire d'étanchéité (16), en vue du raccordement avec le perçage de carter (2).

6. Soupape à coulisse du type à voies multiples selon les revendications 3 et 4, caractérisée par le fait que par suite de la position du disque annulaire d'étanchéité (16) et/ou du couvercle de carter (14), par rapport à une surface frontale de carter (15; 15') du carter de soupape (1), une seule des deux ouvertures de raccordement du canal de commande (19, 19' ou 30, 30'), située du côté frontal du carter, et qui sont en liaison avec la plaque de support de soupape ou en liaison avec une électrovanne, est reliée par l'intermédiaire d'une gorge associée (21 ou 33), ménagée dans le couvercle de carter (14), à l'ouverture du carter (2) et sur un côté de la coulisse (tiroir) (3) pour la charge en pression de la coulisse (3), au choix, avec une pression de commande provenant d'une conduite à pression de commande reliée à la plaque de support de la soupape ou avec une pression d'un milieu sous pression reliée à une électrovanne.

7. Soupape à coulisse du type à voies multiples selon la revendication 1, caractérisée par le fait que du côté du piston de commande et contre la surface frontale associée du carter (1), et avec interposition d'un disque annulaire d'étanchéité (16), est susceptible d'être appliquée, de façon étanche au milieu sous pression, une bague de carter intermédiaire (39) ayant un diamètre intérieur supérieur à celui du perçage axial et cylindrique (2) ménagé dans le carter pour la coulisse (3), la réalisation étant telle que le piston de commande (38) est susceptible d'être déplacé dans la bague intermédiaire de carter (39), et que contre la bague intermédiaire de carter (39) et avec interposition d'un second disque annulaire d'étanchéité (13), est susceptible d'être relié, avec étanchéité à la pression, un couvercle de carter (14), la bague intermédiaire de carter (39) comportant au moins un perçage axial (40) qui est en liaison, par l'intermédiaire de l'ouverture (20) ménagée dans le disque annulaire d'étanchéité (16), avec le perçage de canal de commande (18; 18') ménagé dans le carter de soupape (1).

8. Soupape à coulisse du type à voies multiples selon la revendication 7, caractérisée par le fait que les couvercles du boîtier de soupape (14) et les disques annulaires d'étanchéité associés (16) sont, avec ou sans interposition d'une bague intermédiaire de carter (39), réalisée de la même façon, et les disques annulaires d'étanchéité (16) entre le couvercle de carter (14) et le carter de soupape (1), entre la bague intermédiaire de carter (39) et le carter de soupape (1) et entre le couvercle de carter (14) et la bague ou l'anneau intermédiaire de carter (39), sont réalisés de la même façon.

9. Soupape à coulisse du type à voies multiples selon la revendication 1, du genre dans laquelle la coulisse de soupape est entourée sur la totalité de sa longueur axiale d'un matériau d'étanchéité uniforme présentant dans plusieurs parties annulaires radiales et successives de la coulisse de soupape, des fonctions d'anneaux d'étanchéité, du genre de pistons, caractérisée par le fait que le matériau d'étanchéité repose fermement et avec une tension préalable élastique sur la coulisse de soupape qui est réalisée sous la forme d'une tige cylindrique, et que le matériau d'étanchéité à engager sur la tige et qui est de ce fait susceptible d'extension élastique, comporte, sur sa périphérie extérieure, et en plusieurs emplacements successifs, des bourrelets d'étanchéité radiaux et circulaires, possédant une fonction d'étanchéité analogue à des pistons annulaires.

EP 0 198 234 B1

Y     S     A     P     B     R     X